Europäisches Patentamt

European Patent Office

Office européen des brevets

(19)

(11) Publication number: **0 439 912 B1**

## EUROPEAN PATENT SPECIFICATION

(45) Date of publication of patent specification: **17.08.94**

(51) Int. Cl.5: **G01D 3/02**, G01D 18/00, G01J 5/56

(21) Application number: **90312526.8**

(22) Date of filing: **16.11.90**

(54) **Circuit and method for normalizing detector output.**

(30) Priority: **30.11.89 US 444184**

(43) Date of publication of application:
**07.08.91 Bulletin 91/32**

(45) Publication of the grant of the patent:
**17.08.94 Bulletin 94/33**

(84) Designated Contracting States:
**DE FR GB IT NL**

(56) References cited:
**GB-A- 2 149 260**

**PATENT ABSTRACTS OF JAPAN, vol. 7, no. 15 (P-169), January 21, 1983 & JP-A-57 172 206**

(73) Proprietor: **TEXAS INSTRUMENTS INCORPO-RATED**
**13500 North Central Expressway**
**Dallas Texas 75265 (US)**

(72) Inventor: **Noeth, John Carl**
**5221 Turtle Cove Road**
**Garland, Texas 75040 (US)**
Inventor: **Robertson, James E.**
**2557 Ouail Ridge Drive**

**Denton, Texas 76201 (US)**
Inventor: **Zumwalt, Terry Lee**
**2034 Sage Drive**
**Garland, Texas 75040 (US)**
Inventor: **Mortland, Glenn Timothy**
**210 West Apollo**
**Garland, Texas 75040 (US)**
Inventor: **Box, David Oliver**
**521 Lakewood Drive**
**McKinney, Texas 75069 (US)**

(74) Representative: **Abbott, David John et al**
**Abel & Imray**
**Northumberland House**
**303-306 High Holborn**
**London, WC1V 7LH (GB)**

EP 0 439 912 B1

**Description**

TECHNICAL FIELD OF THE INVENTION

This invention relates in general to systems for processing data from detector networks, and more particularly to a normalization circuit and method for normalizing the data output from a detector.

BACKGROUND OF THE INVENTION

GB-A-2 149 260 discloses an image processing system which normalises the outputs of each detector of an infra-red detector array. In operation the detector array is first pointed in turn at two reference scenes of uniform but different temperature. The output generated from each detector of the array is used to calculate offset and gain values of that detector's response characteristic. Those two values are used to calculate two correction factors for the detector which when applied to the output of the detector correct its response to the average response of all of the detectors of the array. Thus all detectors of the array have the same corrected response which removes distortion in images, captured by the array, that are caused by non-uniformity of the detectors.

The Patent Abstracts of Japan, Volume 7, No.15 of January 1983 at page 189 in the abstract for JP-A-57 172 206 discloses apparatus for correcting values produced by an X-ray sensing system for measuring the thicknesses of steel plates. From time to time the sensing system is caused to measure two standard samples. Those measurements are used to calculate the variation in the offset and gain of the system for the purpose of correcting the measured values of the thicknesses of plates sensed by the system.

In signal processing applications that use detector networks for data input, a common problem is random detector output errors that affect the reliability of detector data input to the processing system. Detector output over time is affected by such factors as operating environment, structural materials and fabrication processes. Resulting detector output errors tend to be nonuniform, and even more problematic, tend to change unpredictably with changes in operating environment and duty cycle.

An example of a system that processes data generated by a detector network is a thermal imaging system, which includes a thermal detection subsystem with a network of thermal radiation detectors (such as a focal plane array). The detector array is typically scanned across the image scene, and incident thermal radiation is gathered by the detectors and converted by the thermal detection subsystem into digital detector output samples that comprise the pixels (picture elements) of the image scene. Because of nonuniformities in both structural materials and fabrication processes, the detector-to-detector response to a given level of incident thermal radiation is nonuniform.

The conventional approach to increasing the accuracy of detector output data is to calibrate detector response by calibrating, and periodically recalibrating, the detector network. While the signal processing system is off-line, a reference is introduced -- such as a thermal reference source in the case of the exemplary thermal imaging system -- and the response of each detector in the detector network to the reference is recorded. From these detector reference responses, a detector calibration error representative of deviation in detector reference response from the ideal can be computed for each detector of the detector network, and used during on-line processing to correct detector output.

While the calibration correction for each detector will be different because of nonuniformities in detector-to-detector response to the reference, the reference output error for each detector can be characterized by a first order linear normalisation function $m(x + b)$, here m is a gain factor, b is an offset level, and x is the actual output of the detector. That is, for each detector, detector response (x) to a reference source input can be used to calibration calibration gain (m) and offset (b) coefficients for correcting detector output. These calibration coefficients are than used to correct detector output errors during on-line operation.

A problem with this calibration approach is that detector output changes unpredictably as a function of time and operating environment. As a result, the calibration coefficients computed during a calibration procedure become less representative of actual detector output errors, and therefore, less able to provide adequate compensation. Thus, while regular recalibration can be used to compensate for static performance deviations (such as caused by structural changes or materials degradation), achieving continuously accurate data from a periodically recalibrated detector network is made problematic by dynamic operational nonuniformities in detector response.

An additional problem with detector output accuracy is the limit on precision conventionally obtainable from detector networks. That is, even without the problem of detector output errors due to dynamic nonuniform changes in detector performance, many conventional detector networks can not provide data with the level of precision that the associated signal processing systems are capable of handling. This limit on the precision of detector data output effectively limits signal processing accuracy and flexibility.

In the case of the exemplary thermal imaging system, current thermal detector technology typically limits precision to 12 bits -- beyond that level, detector noise resulting from random nonlinearities and nonuniformities become significant in terms of limiting the precision of the detector output signal. However, these thermal imaging systems typically incorporate the image processing capability to handle at least 16-bit precision.

Accordingly, a need exists for a detector normalization circuit that normalizes detector output using dynamically updated gain and offset normalization coefficients, maintaining detector output accuracy over a relatively long period of time under a variety of operating conditions. Preferably, such a detector normalization system would provide means to increase the precision of the detector output data.

## SUMMARY OF THE INVENTION

According to one aspect of the present invention there is provided a normalisation system for normalising signals output from a detector, comprising:

reference means that causes the detector to detect a reference source, the detector generating, in response to the reference source, detector reference signals which exhibit offset and gain errors relative to a required detector output characteristic;

a coefficient processor for generating, in response to the detector reference signals, respective offset and gain coefficients;

offset addition and gain multiplication logic, synchronised with the detector output signals, for performing on each output signal of the detector an addition of its respective offset coefficient and a multiplication by its respective gain coefficient;

the offset and gain coefficients being so generated that the offset addition and gain multiplication logic corrects the offset and gain errors to form normalised detector signals having the required characteristic,

characterised in that the reference means is designed in such a way as to cause the detector to detect the reference source at selected update times and the coefficient processor generates the coefficients at each update time,

in that the coefficient processor is so adapted that it computes the gain and offset coefficients with greater precision than that of the detector output signals and in that the normalised detector signals are of greater precision than the detector output signals.

According to another aspect of the present invention there is provided a method of normalising signals output from a detector, comprising:

detecting a reference source with the detector,

generating from the detector, in response to the reference source, detector reference signals which exhibit offset and gain errors relative to a required detector output characteristic,

transmitting the detector reference signals to a coefficient processor,

in response to the detector reference signals, computing respective offset and gain coefficients,

performing, with adding circuitry and a multiplier, on each detector output signal, an addition of its respective offset coefficient and a multiplication by its respective gain coefficient,

the offset and gain coefficients being so computed that their application to the detector output signals corrects the offset and gain errors to form normalised detector signals,

characterised in that the detecting of the reference source and the generating of the detector reference signals occur at selected update times,

in that the gain and offset coefficients are computed to a greater precision than that of the detector output signals, and in that the normalised detector signals are of greater precision than the detector output signals.

In one example the present invention dynamically normalizes detector output using normalization (gain and offset) coefficients that are updated in real time, both for correcting detector output errors, and for providing greater detector output precision.

In another example of the invention, a normalization system receives detector output data from a detector network. At selected intervals, the detector network is caused to sample a reference source, providing a detector reference response for each detector. For each such interval, a coefficient processor is responsive to the detector reference responses to generate correspondingly updated gain and offset normalization coefficients for each detector.

In synchronism with the receipt of detector output data, offset addition logic adds to the detector data the corresponding offset normalization coefficients, while gain multiplication logic multiplies the detector data by the corresponding gain normalization coefficients. As a result, the detector data is normalized according to the normalization function represented by the offset and gain normalization coefficients.

Preferably, the coefficient processor processes an arbitrary number of detector reference responses for each detector to reduce signal noise. Taking advantage of the resulting increase in signal-to-noise ratio, the coefficient processor can generate offset and gain normalization coefficients with greater precision than the precision of the detector output data, allowing the detector normalization circuit to generate normalized detector data also having greater precision than the detector output data.

In more specific aspects of the invention, a normalization circuit is used in an exemplary thermal imaging system having an array of thermal radiation detectors. The detector array is caused to periodically scan two separate thermal references, providing corresponding detector reference responses to the system processor, which performs the coefficient processing function. Using a conventional averaging analysis, the processor reduces random noise effects, and increases signal-to-noise ratio, enabling the gain and offset normalization coefficients to be computed with greater precision than the detector output data.

The normalization circuit receives 12-bit detector data from the detector array, and outputs 15-bit normalized detector data (representing a 3-bit increase in precision), using 16-bit gain and offset normalization coefficients. For each detector, an offset addition operation adds to the 12-bit detector data the 12 MSB of the corresponding offset coefficient. After the offset addition operation, the 4 LSB of the offset coefficient are concatenated to obtain offset-corrected detector data with correspondingly increased precision. After a 16 x 15 gain multiplication operation completes the m (x + b) normalization using the corresponding gain normalization coefficient, bits representing unnecessary precision are discarded, and a final clipping operation yields normalized detector data of the desired precision (15 bits).

The technical advantages of the invention include the following. The normalization system uses offset and gain normalization coefficients that are continuously updated in real time to accommodate nonuniform changes in detector response during operation. Using a noise-reduction averaging analysis of the detector output data, offset and gain normalization coefficients can be computed with greater precision than the detector output data. The dynamically updated normalization approach of the invention is readily adaptable to general signal processing applications using detector data input.

BRIEF DESCRIPTION OF THE DRAWINGS

For a more complete understanding of the present invention, and for further features and advantages, reference is now made to the following Detailed Description, taken in conjunction with the accompanying Drawings, in which:

FIGURES 1a-1b respectively illustrate ideal and actual detector array responses to thermal reference sources;

FIGURE 2 is a general functional block diagram of an exemplary normalization system used in a thermal imaging application; and

FIGURE 3 is a schematic block diagram of the normalization circuit.

DETAILED DESCRIPTION OF THE INVENTION

The Detailed Description of the preferred embodiment of a detector normalization circuit and method is organized as follows:
1. Thermal Detector Response
2. Functional Description
3. Circuit Description
    3.1. Signal Input/Output
    3.2. Detector Normalization Circuit
4. Operation
    4.1. Coefficient Update
    4.2. Detector Normalization
    4.3. Timing
5. Conclusion

The preferred embodiment of the invention is described in relation to an exemplary detector normalization application for a thermal imaging system in which the detector normalization circuit is used to normalize 12-bit thermal image scene data from a focal plane array of detectors to obtain 15-bit normalized detector data. The thermal imaging system includes a thermal detection subsystem that generates successive frames of 12-bit digitized detector samples, or pixels, that are transmitted to the normalization circuit. The thermal detection subsystem includes thermal reference means for causing the detector array to periodically scan two thermal reference sources, generating corresponding 12-bit detector reference samples that are transmitted to the thermal imaging system's signal processor (which performs a coefficient processing function).

While the Detailed Description is in relation to an exemplary thermal detector normalization application, the detector normalization system of this invention has generalized applicability to signal processing systems that process detector data.

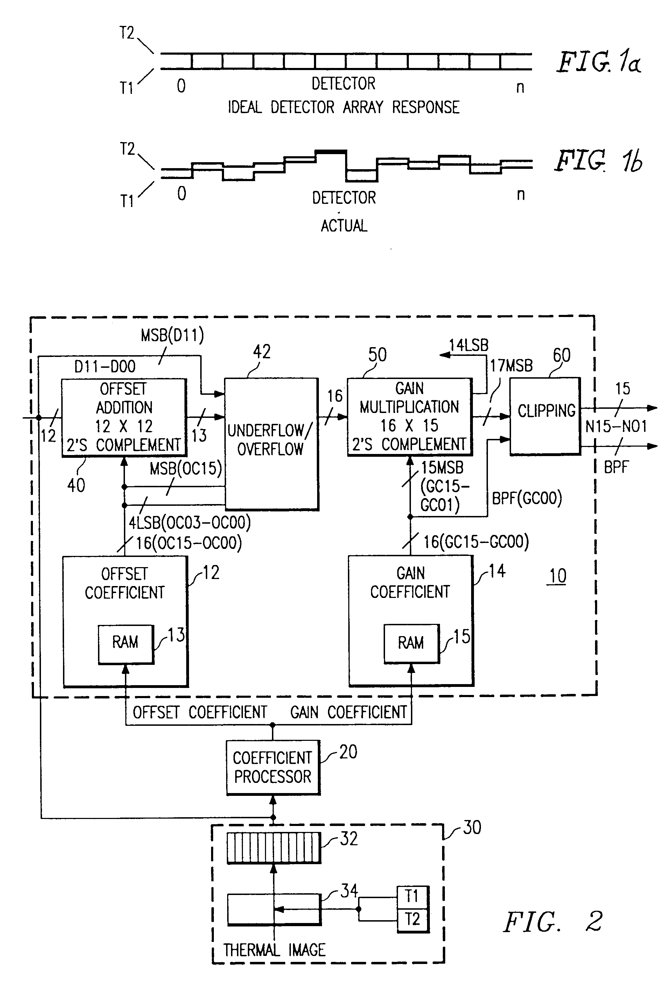

1. Thermal Detector Response. For the exemplary thermal detector normalization application, a comparison of ideal and actual detector array response to two thermal reference sources is illustrated in FIGURES 1a and 1b.

FIGURE 1a illustrates, for an array of n detectors, the ideal responses that would be obtained from scanning two thermal reference sources, T1 and T2. Thus, each of the n detectors would provide a detector output corresponding to temperature T1 for the T1 source, and a detector output corresponding to temperature T2 for the T2 source. In particular, ideal detectors would provide uniform outputs, with identical gain (i.e., the detector output difference between thermal references T1 and T2) and zero offset (i.e., the difference between the detector response and the actual thermal reference).

FIGURE 1b illustrates the more realistic actual response of the array of n detectors to the thermal reference sources T1 and T2. In this case, detector-to-detector nonuniformities, such as those caused by discrepancies in materials and/or fabrication processes, cause the detector-to-detector output response to be nonuniform and unpredictable.

In particular, each detector response to a thermal reference source has a different characteristic gain and offset (i.e., detector response is nonuniform both in terms of offset and gain). Moreover, as described in the Background, detector performance changes nonlinearly with time and operational environment, introducing additional detector nonuniformities.

The detector normalization approach of the invention uses the responses of each detector to two reference sources to compute offset and gain normalization coefficients that characterize detector output error. That is, the normalized response of the detector is given by the normalization function m (x + b), where b is the offset level, m is the gain factor and x is the actual output of the detector.

Accordingly, to perform detector normalization accurately during detector operation, the detector array is caused to periodically scan the thermal reference sources providing detector reference response samples for each detector. For each scan, these detector reference responses are used to compute correcting offset and gain normalization coefficients.

These normalization coefficients are provided to the detector normalization circuit of the invention for use in normalizing actual scene data from the detector array according to the normalization function m (x + b). Preferably, for each normalization-coefficient update operation, computing updated normalization coefficients, and providing them to the detector normalization circuit, is accomplished during the fly-back period between thermal reference scan and image scan, so that the update operation occurs in real time.

Dynamically updating normalization coefficients provides increased accuracy for the detector normalization operation by reducing the affect of nonuniformities in detector performance as a function of time and operating environment. This normalization-coefficient update operation provides another mechanism for increasing detector output accuracy -- using conventional noise-reduction averaging techniques, the scan-to-scan signal-to-noise ratio for the detector reference responses can be improved to provide greater precision for the detector normalization operation.

Specifically, for the exemplary application of the detector normalization circuit in a thermal imaging system, the thermal detectors provide a 12-bit detector response to incident thermal radiation -- noise constraints prevent the detector array from providing detector output data with any greater precision. Using the real time normalization-coefficient update approach of the invention, noise is reduced by averaging a selected sequence of scan-to-scan detector responses to the thermal reference sources. The resulting increase in signal-to-noise ratio allows normalization gain and offset coefficients to be computed with 16-bit precision. This 16-bit precision for the normalization gain and offset coefficients allows the detector normalization circuit to achieve 15-bit normalized detector output precision.

2. Functional Description. FIGURE 2 is a general functional diagram for the detector normalization circuit of the invention. As described in Section 1, the detector normalization circuit implements the normalization function m (x + b) using offset (b) and gain (m) normalization coefficients that are continuously updated in real time.

The detector normalization circuit has two modes of operation -- (a) coefficient update, and (b) detector normalization (using the updated coefficients). For the exemplary application in a thermal imaging system, the coefficient update operation is performed during the fly-back interval between completing a scan of the thermal reference sources and beginning a thermal image scan.

For the coefficient update operation, the detector normalization circuit 10 includes normalization offset coefficient logic 12 with an offset coefficient RAM 13, and normalization gain coefficient logic 14, with a gain coefficient RAM 15. Offset and gain normalization coefficients stored in respective RAMs 13 and 15 are updated continuously by a coefficient processing operation.

For the exemplary thermal imaging application, dynamic update of the gain and offset normalization coefficients is performed by the signal processor in the thermal imaging system -- this function is represented in FIGURE 2 as a coefficient processor 20. The designation "coefficient processor" is intended to be an entirely general functional designation. The coefficient processing function can be implemented in a number of ways, such as by a custom processor chip or as a task in a general system processor.

Thermal detection is performed by a thermal detection subsystem 30. The thermal detection subsystem includes a focal plane array 32 of thermal detectors, and a scanner 34.

In normal thermal imaging operation, the scanner scans the detector array across the image scene, generating standard 12-bit detector output data. At selected intervals, such as at the end of each complete thermal image scan, the scanner can be directed to scan the detector array across both of the thermal reference sources T1 and T2. In response to scanning the thermal reference sources, each detector of the detector array provides corresponding 12-bit detector reference response samples (one set of detector array samples associated with each thermal reference source). These detector reference responses are provided to the coefficient processor.

The coefficient processor computes the offset and gain normalization coefficients with 16-bit precision (i.e., 4 bits greater than the 12-bit precision achieved by the detectors). As discussed in Section 1, a conventional averaging analysis of a sequence of detector reference responses from each detector (i.e., multiple sets of detector array reference responses) is used to filter detector noise and achieve an improved signal-to-noise ratio for the detector reference responses, thereby allowing greater precision in computing the normalization coefficients.

After updated offset and gain coefficients are computed, they are transferred to the respective offset and gain coefficient RAMS 13 and 15 in the detector normalization circuit. During detector normalization operations, the updated coefficients are read-out in synchronism with the detector output data samples received from the thermal detector subsystem 30 (i.e., from the detector array in response to scanning an image scene).

For the detector normalization operation, detector normalization circuit 10 first performs an offset addition operation 20. This 12 x 12 2's complement addition operation adds to each input 12-bit 2's complement detector sample D11-D00 the 12 MSB of the normalization offset coefficient. The resulting offset addition value is concatenated with the 4 LSB of the offset normalization coefficient (representing the increase in precision provided by the coefficient processing operation). After an overflow/underflow clipping operation 22, a 16-bit (signed) offset-corrected detector sample is obtained.

A gain multiplication operation 30 performs a 16 X 15 2's complement multiplication of the 16-bit offset-corrected detector sample and the 15-MSB of the 16-bit gain normalization coefficient (the LSB of the gain coefficient is a bad pixel flag). For the exemplary thermal imaging application, the 14 LSB of the resulting 31-bit gain multiplication value represent unnecessary precision, and are discarded.

Finally, a clipping operation 60 clips the 17-bit offset/gain-corrected detector sample to provide the 15-bit 2's complement normalized detector sample output from the detector normalization circuit.

Selecting appropriate normalization coefficient update intervals is a design choice, subject to an assessment of the detector output nonuniformities manifested during detector operation. The recommended approach is to cause the scanner to scan the detector array across the thermal reference sources at the end of each thermal image scan. In this approach, the fly-back interval between the end of the thermal reference scan and the beginning of the next thermal image scan is used to compute the corresponding 16-bit offset and gain normalization coefficients, and to load these coefficients into the respective offset and gain coefficient RAMs 13 and 15. Thus, for each frame of scene data from a thermal image scan, updated offset and gain normalization coefficients are provided to the detector normalization circuit, effecting a real time normalization-coefficient update operation.

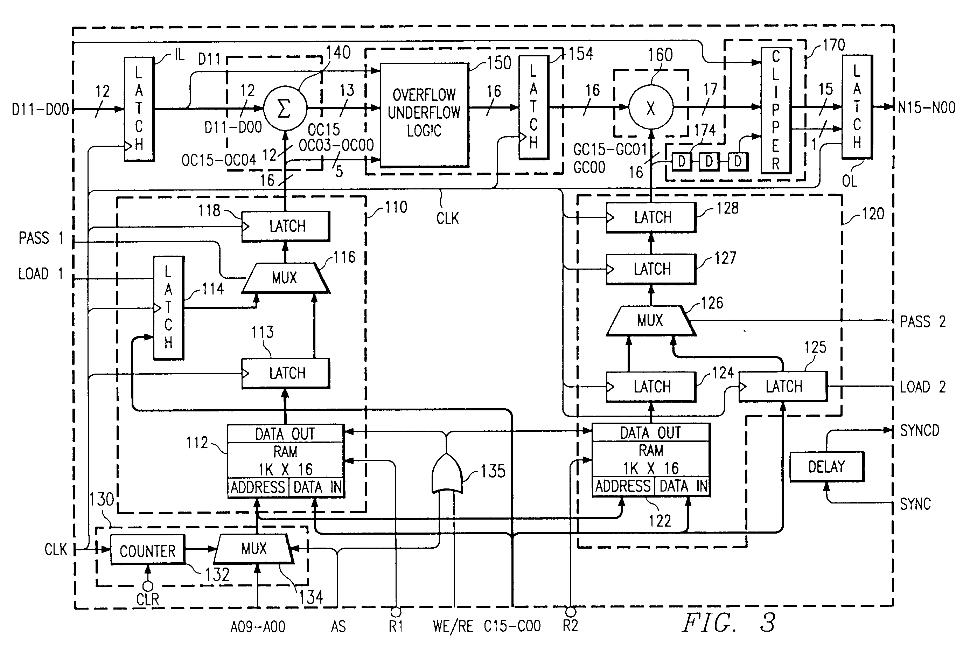

3. Circuit Description. FIGURE 3 is a schematic block diagram of the detector normalization circuit of the invention, configured for the exemplary application of normalizing detector output in a thermal imaging system. Implementing the detector normalization circuit as an application specific integrated circuit (ASIC) is recommended.

3.1. Signal Input/Output. With reference to FIGURE 3, the signal inputs to the detector normalization circuit for coefficient update and read-out operations are:

| Signal Name | Description |
|---|---|
| CD15-CD00 | Normalization coefficients to be loaded into respective offset/gain coefficient RAMs |
| A09-A00 | Address for externally addressing offset and gain coefficient RAMs |
| CLR | Reset the internal address counter to zero |
| WE/RE | WRITE/READ normalization coefficients into/from a respective coefficient RAM |
| AS | When active, selects internal addressing by the address counter; when inactive, selects external addressing A09-A00 |
| PASS1 | When active, selects a TEST offset coefficient loaded directly into a latch by the coefficient processor (used for test purposes) |
| PASS2 | When active, selects a TEST gain coefficient loaded directly into a latch by the coefficient processor (used for test purposes) |
| LOAD1 | When PASS1 is active, enables the latch that feeds the TEST offset coefficient |
| LOAD2 | When PASS2 is active, enables the latch that feeds the TEST gain coefficient |

The signal inputs to the detector normalization circuit for the detector normalization operations are:

| Signal Name | Description |
|---|---|
| D11-D00 | Two's complement input thermal detector data samples (pixels) to be normalized |
| SUBSEL | Selects pixel substitution -- when active, the bad pixel flag (identifying defective detectors) causes the data to be substituted with all zeros, or when inactive, the bad pixel flag is subtended to the 15-bit normalized detector data N15-N01 without data being altered |
| SYNC | Signal indicating that the input detector data D11-D00 is valid; must be pipeline delayed to accommodate the detector normalization operation |
| R1 | When active, enables the offset coefficient RAM for reading and writing; when inactive, the RAM is placed in a power-saver mode |
| R2 | When active, enables the gain coefficient RAM for reading and writing; when inactive, the RAM is placed in a power-saver mode |

The signal outputs from the detector normalization circuit are:

| Signal Name | Description |
|---|---|
| N15-N01 | 15-bit 2's complement normalized detector output data |
| N00 | Bad pixel flag which when set identifies defective detectors in the detector array -- stored in the coefficient processor and provided as the LSB of the 16-bit gain coefficient in the gain coefficient RAM, which is appropriately delayed and then output with the corresponding normalized (or zeroed) detector output data N15-N00 |
| SYNC | Pipeline delayed SYNC signal |

In addition, an external clock CLK is used to clock all data transfer and latching operations for the detector normalization circuit. For typical ASIC implementations, CLK will have a maximum frequency of about 25 MHz.

3.2. Detector Normalization Circuit. The detector normalization circuit implements the exemplary detector normalization function for the thermal imaging system according to the transfer function:

$$CLIP2([CLIP1([[(D11-D00) + (OC15-OC04)]^*2^4 + (OC03-OC00)])]^* ((GC15-GC00) * 2^{-1}]^*2^{-14})$$

CLIP1 $\equiv$ Overflow/Underflow Clipping

CLIP2 $\equiv$ Range Clipping

As shown in FIGURE 3, detector normalization circuit 100 includes offset coefficient logic 110, gain coefficient logic 120 and addressing logic 130. The offset and gain coefficient logic stores the corresponding offset and gain normalization coefficients, which are read out during the detector normalization operations in synchronism with the receipt of thermal detector output data from the thermal detection subsystem.

8

Offset coefficient logic 110 includes an offset coefficient RAM 112 -- a 1K X 16 RAM that stores a 16-bit (signed) offset normalization coefficient for each detector in the detector array. Offset coefficient RAM 112 receives addresses AO9-AOO from the address data bus ADB, and offset coefficients from the coefficient processor over the coefficient data bus CDB. The offset coefficient RAM is enabled/disabled by the control signals R1 and WE/RE.

The offset coefficient output from the offset coefficient RAM 112 is applied to a latch 113. A latch 114 is used for TEST offset coefficients that can be supplied by the coefficient processor over the coefficient data bus CDB (when LOAD1 is active).

A multiplexer 116 is responsive to PASS1 to select either the offset normalization coefficient from the offset coefficient RAM 112 (through latch 113), or the TEST offset coefficient from the coefficient processor (through latch 114). The offset coefficient output from multiplexer 116 is applied to a latch 118.

The latches 113, 114 and 118 are clocked by CLK.

The gain coefficient logic 120 includes a gain coefficient RAM 122 -- a 1K X 16 RAM that stores a 16-bit (signed) gain normalization coefficient for each detector of the focal plane array. Gain coefficient RAM 122 receives addresses AO9-AOO over the address data bus ADB, and the gain coefficients from the coefficient processor over the coefficient data bus CDB. The gain coefficient RAM is enabled/disabled by the control signals R2 and WE/RE.

Gain coefficients output from gain coefficient RAM 122 are applied to a latch 124. A TEST gain coefficient can be supplied by the coefficient processor (over the coefficient data bus CDB) to a latch 125 (when enabled by LOAD2).

A multiplexer 126 is responsive to PASS2 to select either a gain normalization coefficient from the gain coefficient RAM 122 (through latch 124) or a TEST gain coefficient from the coefficient processor (through latch 125). The multiplexer output is applied through a latch 127 to a latch 128, which together provide an appropriate pipeline delay.

Latches 124, 125, 127 and 128 are clocked by CLK.

The internal addressing logic 130 is used to provide internal addresses to the offset coefficient and gain coefficient RAMs 112 and 122 in synchronism with the thermal detector output samples received by the detector normalization circuit. The addressing logic includes an internal address counter 132 and a multiplexer 134. Address counter 132 is cleared by CLR, and then clocked by CLK to provide sequential addresses to multiplexer 134. The multiplexer is responsive to AS to select either the internal address from address counter 132, or an external address AO9-A00 from the coefficient processor. The address output from multiplexer 134 is provided to the offset and gain coefficient RAMs 112 and 122 over the address data bus ADB.

External addressing is used during the coefficient update mode of operation to load offset and gain normalization coefficients into the respective offset and gain coefficient RAMs (which are write-enabled by AS through an OR gate 135). Internal addressing is used during the detector normalization mode of operation, to read out updated offset and gain normalization coefficients stored in respective RAMs (which are read-enabled by AS through the OR gate 135).

To implement detector normalization, detector normalization circuit 100 includes an offset adder 140 with underflow/overflow logic 150, and a gain multiplier 160 with output clipper logic 170. This logic performs detector normalization operations using the gain and offset normalization coefficients retrieved from the gain/offset coefficient logic 110/120 in synchronism with the receipt of detector output samples.

The 12-bit 2's complement thermal detector data samples D11-D00 from the detector array are clocked by CLK into an input latch IL.

Offset adder 140 receives a 12-bit detector sample D11-D00 and the 12 MSB of the corresponding 16-bit offset normalization coefficient OC15-OC04, and performs a 2's complement addition, providing a 13-bit offset addition value (12 bits plus a carry bit). The 4 LSB of the offset coefficient bypass the addition operation.

The 13-bit offset addition value from adder 140 and the 4 LSB of the offset coefficient are applied to overflow/underflow logic 150, which also receives the MS (sign) bits for both the detector data (D11) and the offset coefficient (OC15). Overflow/underflow logic 150 concatenates the 13-bit offset addition value and the 4 LSB of the offset coefficient, and performs a conventional overflow/underflow operation that limits the output from the offset addition operation to 16 bits (preventing inadvertent wrap-around). The resulting 16-bit 2's complement offset-corrected detector data is clocked by CLK into a latch 154.

The 16-bit offset-corrected detector sample from latch 154 is input to gain multiplier 160, which also receives the 15 MSB of the corresponding 16-bit gain normalization coefficient GC15-GC1 (the LSB of the gain coefficient is the bad pixel flag). Gain multiplier 160 performs 16 X 15 2's complement multiplication. The LS 14 bits of the multiplication represent unnecessary precision for the exemplary thermal imaging application, and are discarded, leaving a 17-bit output from the multiplier.

Clipper 170 receives the 17-bit offset/gain-corrected detector data, along with the bad pixel flag GCOO (i.e., the LSB of the gain coefficient) through an appropriate delay 174, and SUBSEL. Clipper 170 performs a conventional clipping operation to provide 15-bit (signed) normalized detector data.

The 15-bit normalized detector data is clocked by CLK into an output latch OL (along with the bad pixel flag), which interfaces to a normalized data bus N15-N00.

4. Operation. The two modes of operation of the detector normalization circuit -- (a) coefficient update, and (b) detector normalization with coefficient read-out - - are executed under control of the coefficient processor and CLK.

4.1. Coefficient Update. With reference to FIGURE 3, the coefficient update operation is used to load offset and gain normalization coefficients into respective offset and gain coefficient RAMs 112 and 122, for read-out during detector normalization operations in synchronism with the detector output data received from the thermal detection subsystem. In an alternate test mode, TEST offset and gain coefficients can be provided directly from the coefficient processor, bypassing the gain and offset coefficient RAMs. Synchronization is controlled by CLK.

A coefficient update operation is initiated by the coefficient processor, which sets the RAMs in the write-enable mode using WE/RE, and selects external addressing using the AS line. The updated offset and gain coefficients are transmitted serially over the coefficient data bus CDB, with the corresponding external memory addresses AO9-AOO being applied through multiplexer 134 to the offset and gain coefficient RAMs. When a separate offset and gain coefficient for each thermal detector of the detector array has been loaded, the detector normalization circuit is ready for normalizing the detector data from the next thermal image scan.

4.2. Detector Normalization Operation. With reference to FIGURES 2 and 3, for the exemplary thermal imaging application, the detector normalization circuit normalizes input 12-bit 2's complement detector data DII-DOO, providing corresponding normalized detector data N15-NOO with 15-bit precision (i.e., 15 bits of normalized detector data N15-NOI and a bad pixel flag NOO).

The detector normalization operation is synchronized by CLK with the read-out of the offset and gain normalization coefficients. That is, for each detector sample clocked into input latch IL, a corresponding offset coefficient is clocked into latch 118, and a corresponding gain coefficient is clocked into latch 127 (and then into latch 128 on the next clock cycle).

During detector normalization operations, internal addressing controls offset/gain coefficient read-out. At the beginning of a frame of detector output data, the address counter 132 is cleared by CLR, the AS line is switched to select internal addressing, and the offset and gain coefficient RAMs 112 and 122 are set in the read-enable mode by WE/RE. Clocked by CLK, address counter 132 provides sequential addresses (through multiplexer 134) over the address data bus ADB to the offset and gain coefficient RAMs 112 and 122. The addressed offset and gain coefficients are clocked into respective latches 113 and 124. The offset normalization coefficient in latch 113 is selected by multiplexer 116 (PASS1 inactive) and clocked into latch 118 for presentation to the offset adder 140. The gain normalization coefficient in latch 124 is selected by multiplexer 126 (PASS2 inactive) and clocked into latch 127. On the next clock cycle, the gain coefficient is clocked into latch 128 (providing a one clock cycle delay to accommodate the offset addition operation) and presented to the gain multiplier 160.

The alternate test operation permits the coefficient processor to feed TEST offset and gain coefficients directly to the offset adder 140 and gain multiplier 160. The coefficient processor provides the TEST offset and gain coefficients over the coefficient data bus CDB to respective latches 114 and 125, which are enabled for input on the next clock cycle by switching LOAD1 and LOAD2 active. Multiplexers 116 and 126 select the TEST offset and gain coefficients in latches 114 and 135 in response to PASS1 and PASS2 being switched active.

The offset addition operation 20 performs a 12 X 12 2's complement addition of the input 12-bit 2's complement detector data sample DII-DOO and the 12 MSB of the associated offset coefficient OC15-OC04 from latch 118. The 4 LSB of the offset coefficient OC03-OC00, representing increased precision provided by the coefficient processing operation described in Section 1, bypass the offset addition operation. The offset addition result is 13 bits (12 bits plus a carry-out bit).

The overflow/underflow operation 22 takes care of any overflow or underflow conditions from the offset addition operation 20. The 13-bit precision of the offset addition result is increased by concatenating the 4 LSB of the offset coefficient OC03-OC00 -- the overflow/underflow operation affects the higher precision 17-bit offset addition value. Because both the detector data D11-D00 and the offset normalization coefficient OC15-OC00 are signed, the overflow/underflow operation takes into account both sign bits (D11 and OC15). Based on the 17-bit offset addition value and the 2 sign bits, the overflow/underflow operation provides 16-

EP 0 439 912 B1

bit 2's complement offset-corrected detector data, preventing any undesired wrap-around resulting from overflow/underflow conditions.

The gain multiplication operation 50 multiplies the 16-bit 2's complement offset detector output data by the 15 MSB of the associated 16-bit (signed) gain normalization coefficient from latch 128. The LSB GCOO of the gain coefficient is the bad pixel flag, which is not used in the gain multiplication operation. For the exemplary thermal imaging application, the 31-bit multiplication result contains unnecessary precision. Specifically, the 14 LSB of the multiplication result can be discarded. The result is a 17-bit 2's complement offset/gain-corrected detector data value.

In the final clipper operation 60 the 17-bit offset/gain-corrected detector data is clipped to provide the desired 15-bit 2's complement normalized detector data that is latched into output latch OL. That is, in accordance with conventional clipper operation, 15-bit values greater than 3FFF hexadecimal are assigned a value of 3FFF, while values less than C000 are assigned a value of C000.

Alternatively, if SUBSEL is active, indicating a substitution condition, then if the bad pixel flag OCOO is set, the clipper operation effects a substitution by providing a 15-bit all-zero output. Otherwise, if the bad pixel flag is not set, it is subtended to the unsubstituted 15-bit normalized detector data.

The detector normalization operation performed by the detector normalization circuit of the invention provides a 16-bit output N15-N00 comprising 15-bit 2's complement normalized detector data and the bad pixel flag.

4.3. Timing. The timing conditions associated with the detector normalization operation described in Section 4.2 can be summarized as follows. On the rising clock edge of CLK, the following events occur:

(a) All latches are clocked;

(b) The address counter increments by 1;

(c) Offset addition is performed to add the input detector sample and the associated offset coefficient;

(d) The offset addition result is checked for overflow/underflow;

(e) Gain multiplication is performed to multiply the offset addition result by the associated gain coefficient; and

(f) The resulting offset/gain-corrected data is clipped to provide 15-bit normalized detector data.

Completing these events in one clock cycle of the exemplary 25 MHz clock would require that the following operations be completed in about 40 nsec:

(a) Set up inputs to latches, set up an address to the offset and gain coefficient RAMs, and output valid data from the RAMs;

(b) Complete a 2's complement offset addition, check for overflow/underflow, and set up for input to a latch; and

(c) Complete a 2's complement gain multiplication, perform range clipping and set up for input to the output latch.

5. Conclusion. The detector normalization circuit of the invention implements an m (x + b) normalization function using offset and gain normalization coefficients derived from the periodic responses of a detector array to two reference sources. The offset and gain coefficients are dynamically updated at regular intervals, permitting continuously accurate normalization of the detector data. By averaging detector responses to successive reference scans, the signal-to-noise ratio for the detector reference responses can be improved to permit computation of offset and gain coefficients with greater precision than the precision of the detector output data, thereby enabling the normalized detector data from the detector normalization circuit to be of greater precision than the detector output data.

Although the present invention has been described with respect to a specific, preferred embodiment, various changes and modifications may be suggested to one skilled in the art, and it is intended that the present invention encompass such changes and modifications as fall within the scope of the appended claims.

**Claims**

1. A normalisation system (10,20) for normalising signals output from a detector (32), comprising:

reference means that causes the detector (32) to detect a reference source (T1,T2), the detector generating, in response to the reference source (T1,T2), detector reference signals which exhibit offset and gain errors relative to a required detector output Characteristic;

a coefficient processor (20) for generating, in response to the detector reference signals, respective offset and gain coefficients;

offset addition and gain multiplication logic (40,140,50,160), synchronised with the detector output signals, for performing on each output signal of the detector an addition of its respective offset

11

EP 0 439 912 B1

coefficient and a multiplication by its respective gain coefficient;

the offset and gain coefficients being so generated that the offset addition and gain multiplication logic (40,140,50,160) Corrects the offset and gain errors to form normalised detector signals having the required characteristic,

characterised in that the reference means is designed in such a way as to cause the detector (32) to detect the reference source (T1,T2) at selected update times and the coefficient processor (20) generates the coefficients at each update time,

in that the coefficient processor (20) is so adapted that it computes the gain and offset coefficients with greater precision than that of the detector output signals and in that the normalised detector signals are of greater precision than the detector output signals.

2. A normalisation system according to claim 1, wherein the detector (32) is an array of individual detectors (32) each having its own output signal, and wherein:

for each update time, each individual detector (32) generates a detector reference signal;

for each update time, the coefficient processor (20) generates for each individual detector respective gain and offset coefficients; and

for each individual detector (32), the offset addition and gain multiplication logic (40,140,50,160) is synchronized with the detector array output signals so as to perform the offset addition and gain multiplication operations using the respective offset and gain coefficients for each individual detector.

3. A normalisation system according to claim 2, further comprising:

coefficient logic (12,110,14,120) for storing said offset and gain coefficients for each individual detector, and for providing those coefficients to said offset addition and gain multiplication logic (40,140,50,160) in synchronism with the detector output signals received by the normalisation system;

said coefficient processor (20) providing updated offset and gain coefficients for each individual detector to said coefficient logic (12,110,14,120) each time such coefficients are computed in response to detector reference signals output by the individual detectors at an update time.

4. A normalisation system according to claim 3, further comprising:

addressing logic (130) for providing addresses of the offset and gain coefficients in synchronism with the respective individual detector output signals;

the coefficient logic being responsive to the addresses to provide the offset and gain coefficients.

5. A normalisation system according to claim 3 or claim 4, wherein the coefficient logic comprises:

offset and gain coefficient logic (12,110,14,120), including offset and gain coefficient storage (13,112,15,122) for storing the offset and gain coefficients, and for providing the stored offset and gain coefficients to the offset addition and gain multiplication logic (40,140,50,160).

6. A normalisation system according to any one of claims 1 to 5, wherein said coefficient processor (20) computes the offset and gain coefficients by averaging detector reference signals from a selected number of update times, using the result of such averaging to filter noise and increase signal-to-noise ratio, thereby enabling the coefficient processor (20) to compute said offset and gain coefficients with the greater precision than that of the detector output signals.

7. A normalisation system according to any one of claims 1 to 6, wherein the offset addition and gain multiplication logic (40,140,50,160) is so arranged that each offset coefficient is applied to its respective detector output signal before the respective gain coefficient is applied.

8. A normalisation system according to any preceding claim comprising means for discarding data bits representing unnecessary precision after offset addition and gain multiplication, thereby providing the normalised detector signals to a selected precision.

9. A system comprising a normalisation system (10,20) according to any one of claims 1 to 8 suitable for an array of thermal detectors (32) wherein the reference means is for causing the detectors to detect at least two thermal reference sources (T1,T2), at the update times.

10. A method of normalising signals output from a detector (32), comprising:

detecting a reference source (T1,T2) with the detector (32),

12

EP 0 439 912 B1

generating from the detector (32), in response to the reference source (T1,T2), detector reference signals which exhibit offset and gain errors relative to a required detector output characteristic,

transmitting the detector reference signals to a coefficient processor (20),

in response to the detector reference signals, computing respective offset and gain coefficients,

performing, with adding circuitry (40,140) and a multiplier (50,160), on each detector output signal, an addition of its respective offset coefficient and a multiplication by its respective gain coefficient,

the offset and gain coefficients being so computed that their application to the detector output signals corrects the offset and gain errors to form normalised detector signals,

characterised in that the detecting of the reference source (T1,T2) and the generating of the detector reference signals occur at selected update times,

in that the gain and offset coefficients are computed to a greater precision than that of the detector output signals, and in that the normalised detector signals are of greater precision than the detector output signals.

11. A method according to claim 10, wherein the detector (32) is an array of individual detectors (32) each having its own output signal, further comprising the steps:

storing offset and gain coefficients, for each individual detector (32), which are updated each update time;

providing such coefficients for offset addition and gain multiplication in synchronism with the individual detector output signals.

12. A method according to claim 11, further comprising:

providing coefficient addresses for the offset and gain coefficients in synchronism with their respective detector output signals;

the offset and gain coefficients being provided in response to the coefficient addresses.

13. A method according to any one of claims 10 to 12, wherein the step of computing offset and gain coefficients comprises:

averaging detector reference signals from a selected number of update times; and

using the result of such averaging to filter noise and increase signal-to-noise ratio for the detector.

14. A method according to any one of claims 10 to 13, further comprising:

after offset addition and gain multiplication, discarding data bits representing unnecessary precision, providing the normalised detector signals to a selected precision.

15. A method according to any one of claims 10 to 14, wherein each offset coefficient is added to its respective detector output signal before that signal is multiplied by its respective gain coefficient.

**Patentansprüche**

1. Normierungssystem (10,20) zur Normierung von Signalen, die von einem Detektor (32) ausgegeben werden, mit:

Referenzmitteln, die bewirken, daß der Detektor (32) eine Referenzquelle (T1,T2) erfaßt, wobei der Detektor als Reaktion auf die Referenzquelle (T1,T2) Detektorreferenzsignale erzeugt, die Verschiebungs- und Verstärkungsfehler gegenüber einer geforderten Detektorausgangscharakteristik erkennen lassen;

einem Koeffizientenprozessor (20), der als Reaktion auf die Detektorreferenzsignale zugehörige Verschiebungs- und Verstärkungskoeffizienten erzeugt;

einer Verschiebungsadditions- und Verstdrkungsmultiplikations-Logik (40,140,50,160), die mit den Detektorausgangssignalen synchronisiert ist, um an jedem Ausgangssignal des Detektors eine Addition seines zugehörigen Verschiebungskoeffizienten und eine Multiplikation mit seinem zugehörigen Verstärkungskoeffizienten vorzunehmen;

wobei die Verschiebungs- und Verstärkungskoeffizienten so erzeugt werden, daß die Verschiebungsadditions- und Verstärkungsmultiplikations-Logik (40,140,50,160) die Verschiebungs- und Verstärkungsfehler korrigiert, um normierte Detektorsignale zu bilden, die die geforderte Charakteristik haben,

dadurch gekennzeichnet, daß die Referenzmittel so ausgebildet sind, daß sie bewirken, daß der Detektor (32) die Referenzquelle (T1,T2) in gewählten Aktualisierungszeiten erfaßt und der Koeffizientenprozessor (20) die Koeffizienten in jeder Aktualisierungszeit erzeugt,

13

daß der Koeffizientenprozessor (20) so ausgebildet ist, daß er die Verstärkungs- und Verschiebungskoeffizienten mit einer Genauigkeit erzeugt, die größer als diejenige der Detektorausgangssignale ist, und daß die normierten Detektorsignale eine größere Genauigkeit als die Detektorausgangssignale haben.

2. Normierungssystem nach Anspruch 1, bei welchem der Detektor (32) eine Gruppe von Einzeldetektoren (32) ist, von denen jeder sein eigenes Ausgangssignal hat, und bei welchem:

jeder Einzeldetektor (32) für jede Aktualisierungszeit ein Detektorreferenzsignal erzeugt;

der Koeffizientenprozessor (20) für jeden Einzeldetektor zugehörige Verstärkungs- und Verschiebungskoeffizienten erzeugt; und

für jeden Einzeldetektor (32) die Verschiebungsadditions- und Verstärkungsmultiplikations-Logik (40,140,50,160) mit den Ausgangssignalen der Detektorgruppe so synchronisiert ist, daß sie die Verschiebungsadditions- und Verstärkungsmultiplikations-Operationen unter Verwendung der zugehörigen Verschiebungs- und Verstärkungskoeffizienten für jeden Einzeldetektor durchführt.

3. Normierungssystem nach Anspruch 2, das ferner enthält:

eine Koeffizienten-Logik (12,110,14,120) zur Speicherung der Verschiebungs- und Verstärkungskoeffizienten für jeden Einzeldetektor und zur Lieferung dieser Koeffizienten zu der Verschiebungsadditions- und Verstärkungsmultiplikations-Logik (40,140,50,160) synchron mit den vom Normierungssystem empfangenen Detektorausgangssignalen;

wobei der Koeffizientenprozessor (20) aktualisierte Verschiebungs- und Verstärkungskoeffizienten für jeden Einzeldetektor zu der Koeffizienten-Logik (12,110,14,120) jedesmal dann liefert, wenn diese Koeffizienten als Reaktion auf von den Einzeldetektoren in einer Aktualisierungszeit ausgegebene Detektorreferenzsignale berechnet werden.

4. Normierungssystem nach Anspruch 3, das ferner enthält:

eine Adressenlogik (130) zur Lieferung von Adressen der Verschiebungs- und Verstärkungskoeffizienten synchron mit den zugehörigen Einzeldetektor-Ausgangssignalen;

wobei die Koeffizienten-Logik auf die Adressen anspricht, um die Verschiebungs- und Verstärkungskoeffizienten zu liefern.

5. Normierungssystem nach Anspruch 3 oder Anspruch 4, bei welchem die Koeffizienten-Logik enthält:

eine Verschiebungs- und Verstärkungskoeffizienten-Logik (12,110,14,120) mit Verschiebungs- und Verstärkungskoeffizientenspeichern (13,112,15,122) zur Speicherung der Verschiebungs- und Verstärkungskoeffizienten und zur Lieferung der gespeicherten Verschiebungs- und Verstärkungskoeffizienten zu der Verschiebungsadditions- und Verstärkungsmultiplikations-Logik (40,140,50,160).

6. Normierungssystem nach einem der Ansprüche 1 bis 5, bei welchem der Koeffizientenprozessor (20) die Verschiebungs- und Verstärkungskoeffizienten durch Bildung des Mittelwerts von Detektorreferenzsignalen aus einer gewählten Anzahl von Aktualisierungszeiten berechnet, wobei das Ergebnis dieser Mittelwertbildung zur Filterung von Störungen und zur Erhöhung des Signal-Stör-Verhältnisses verwendet wird, wodurch es dem Koeffizientenprozessor ermöglicht wird, die Verschiebungs- und Verstärkungskoeffizienten mit der Genauigkeit zu berechnen, die größer als diejenige der Detektorausgangssignale ist.

7. Normierungssystem nach einem der Ansprüche 1 bis 6, bei welchem die Verschiebungsadditions- und Verstärkungamultiplikations-Logik (40,140,50,160) so ausgebildet ist, daß jeder Verschiebungskoeffizient auf das zugehörige Detektorausgangssignal angewendet wird, bevor der zugehörige Verstärkungskoeffizient angewendet wird.

8. Normierungssystem nach einem der vorhergehenden Ansprüche, mit Mitteln zum Verwerfen von Datenbits, die eine unnötige Genauigkeit nach der Verschiebungsaddition und der Verstärkungsmultiplikation darstellen, wodurch die normierten Detektorsignale auf eine gewählte Genauigkeit gebracht werden.

9. System mit einem Normierungssystem (10,20) nach einem der Ansprüche 1 bis 8, das für eine Gruppe von Wärmedetektoren (32) geeignet ist, bei welchem die Referenzmittel bewirken, daß die Detektoren wenigstens zwei Referenzwärmequellen (T1,T2) in den Aktualisierungszeiten erfassen.

**10.** Verfahren zur Normierung von Ausgangssignalen eines Detektors (32), bei welchem:

eine Referenzquelle (T1,T2) durch den Detektor (32) erfaßt wird,

von dem Detektor (32) als Reaktion auf die Referenzquelle (T1,T2) Detektorreferenzsignale erzeugt werden, die Verschiebungs- und Verstärkungsfehler gegenüber einer geforderten Detektorausgangscharakteristik erkennen lassen;

die Detektorreferenzsignale zu einem Koeffizientenprozessor (20) übertragen werden,

als Reaktion auf die Detektorreferenzsignale zugehörige Verschiebungs- und Verstärkungskoeffizienten berechnet werden,

durch eine Addierschaltung (40,140) und einen Multiplizierer (50,160) an jedem Detektorausgangssignal eine Addition seines zugehörigen Verschiebungskoeffizienten und eine Multiplikation mit seinem zugehörigen Verstärkungskoeffizienten vorgenommen wird,

wobei die Verschiebungs- und Verstärkungskoeffizienten so berechnet werden, daß ihre Anwendung auf die Detektorausgangssignale die Verschiebungs- und Verstärkungsfehler zur Bildung normierter Detektorsignale korrigiert,

dadurch gekennzeichnet, daß die Erfassung der Referenzquelle (T1,T2) und die Erzeugung der Detektorreferenzsignale in gewählten Aktualisierungszeiten erfolgen,

daß die Verschiebungs- und Verstärkungskoeffizienten mit einer Genauigkeit berechnet werden, die größer als diejenige dar Detektorausgangssignale ist, und daß die normierten Detektorsignale eine größere Genauigkeit als die Detektorausgangssignale haben.

**11.** Verfahren nach Anspruch 10, bei welchem der Detektor (32) eine Gruppe von Einzeldetektoren (32) ist, von denen jeder sein eigenes Ausgangssignal hat, das ferner die Schritte enthält:

Speicherung von Verschiebungs- und Verstärkungskoeffizienten für jeden Einzeldetektor (32), die in jeder Aktualisierungszeit aktualisiert werden;

Lieferung dieser Koeffizienten zur Verschiebungsaddition und Verstärkungsmultiplikation synchron mit den Einzeldetektorausgangssignalen.

**12.** Verfahren nach Anspruch 11, ferner enthaltend:

Lieferung von Koeffizientenadressen für die Verschiebungs- und Verstärkungskoeffizienten synchron mit den Zugehörigen Detektorausgangssignalen;

wobei die Verschiebungs- und Verstärkungskoeffizienten als Reaktion auf die Koeffizientenadressen geliefert werden.

**13.** Verfahren nach einem der Ansprüche 10 bis 12, bei welchem der Schritt der Berechnung von Verschiebungs- und Verstärkungskoeffizienten beinhaltet:

Bildung des Mittelwerts von Detektorreferenzsignalen aus einer gewählten Anzahl von Aktualisierungszeiten; und

Verwendung des Ergebnisses dieser Mittelwertbildung zur Filterung von Störungen und zur Erhöhung des Signal-Stör-Verhältnisses für den Detektor.

**14.** Verfahren nach einem der Ansprüche 10 bis 13, ferner enthaltend:

nach der Verschiebungsaddition und der Verstärkungsmultiplikation werden Datenbits, die eine unnötige Genauigkeit darstellen, verworfen, um die normierten Detektorsignale auf eine gewählte Genauigkeit zu bringen.

**15.** Verfahren nach einem der Ansprüche 10 bis 14, bei welchem jeder Verschiebungskoeffizient zu seinem zugehörigen Detektorausgangssignal addiert wird, bevor dieses Signal mit seinem zugehörigen Verstärkungskoeffizient multipliziert wird.

**Revendications**

**1.** Système de normalisation (10,20) pour normaliser des signaux délivrés par un détecteur (32), comprenant :

des moyens de référence qui amènent le détecteur (32) à détecter une source de référence (T1,T2), le détecteur produisant, en réponse à la source de référence (T1,T2), des signaux de référence du détecteur, qui présentent des erreurs d'offset et de gain par rapport à une caractéristique requise de sortie du détecteur;

un processeur de coefficients (20) servant à produire, en réponse aux signaux de référence du détecteur, des coefficients respectifs d'offset et de gain;

une unité logique (40,140,50,160) d'addition d'offset et de multiplication par le gain, synchronisée sur les signaux de sortie du détecteur pour effectuer, sur chaque signal de sortie du détecteur, une addition du coefficient d'offset respectif de ce signal et une multiplication par le coefficient de gain respectif de ce signal;

les coefficients d'offset et de gain étant produits de telle sorte que l'unité logique (40,140,50,160) d'addition d'offset et de multiplication par le gain corrige les erreurs d'offset et de gain pour former des signaux normalisés du détecteur, présentant la caractéristique requise,

caractérisé en ce que les moyens de référence sont agencés de manière à amener le détecteur (32) à détecter la source de référence (T1,T2) à des instants sélectionnés de mise à jour, et le processeur de coefficients (20) produit les coefficients à chaque instant de mise à jour, et

en ce que le processeur de coefficients (20) est adapté de manière à calculer les coefficients de gain et d'offset avec une précision supérieure à celle des signaux de sortie du détecteur, et en ce que les signaux normalisés du détecteur possèdent une précision supérieure à celle des signaux de sortie du détecteur.

2. Système de normalisation selon la revendication 1, dans lequel le détecteur (32) est un réseau de détecteurs individuels (32) possédant chacun son propre signal de sortie, et dans lequel :

à chaque instant de mise à jour, chaque détecteur individuel (32) produit un signal de référence du détecteur;

pour chaque instant de mise à jour, le processeur de coefficients (20) produit, pour chaque détecteur individuel, des coefficients respectifs de gain et d'offset; et

pour chaque détecteur individuel (32), l'unité logique (40,140,50,160) d'addition d'offset et de multiplication par le gain est synchronisée avec les signaux de sortie du réseau de détecteurs de manière à exécuter les opérations d'addition d'offset et de multiplication par le gain, utilisant les coefficients respectifs d'offset et de gain pour chaque détecteur individuel.

3. Système de normalisation selon la revendication 2, comportant en outre :

une unité logique d'utilisation des coefficients (12,110,14,120) servant à mémoriser lesdits coefficients d'offset et de gain pour chaque détecteur individuel, et pour envoyer ces coefficients à ladite unité logique (40,140,50,160) d'addition d'offset et de multiplication par le gain, en synchronisme avec les signaux de sortie du détecteur reçus par le système de normalisation;

ledit processeur de coefficients (20) envoyant des coefficients d'offset et de gain mis à jour pour chaque détecteur individuel à ladite unité logique d'utilisation des coefficients (12,110,14,120) chaque fois que de tels coefficients sont calculés en réponse à des signaux de référence délivrés par les détecteurs individuels à un instant de mise à jour.

4. Système de normalisation selon la revendication 3, comprenant en outre :

une unité logique d'adressage (130) servant à délivrer des adresses des coefficients d'offset et de gain en synchronisme avec les signaux individuels respectifs de sortie des détecteurs;

l'unité logique d'utilisation des coefficients étant apte à répondre aux adresses pour délivrer les coefficients d'offset et de gain.

5. Système de normalisation selon la revendication 3 ou 4, dans lequel l'unité logique d'utilisation des coefficients comprend :

l'unité logique (12,110,14,120) d'utilisation des coefficients d'offset et de gain comprenant une mémoire de coefficients d'offset et de gain (13,112,15,122) pour mémoriser les coefficients d'offset et de gain et pour envoyer les coefficients d'offset et de gain mémorisés à l'unité logique (40,140,50,160) d'addition d'offset et de multiplication par le gain.

6. Système de normalisation selon l'une quelconque des revendications 1 à 5, dans lequel ledit processeur de coefficients (20) calcule les coefficients d'offset et de gain en formant la moyenne des signaux de référence des détecteurs, à partir d'un nombre sélectionné d'instants de mise à jour, moyennant l'utilisation du résultat d'une telle formation de la moyenne pour filtrer le bruit et accroître le rapport signal/bruit, ce qui permet au processeur de coefficients (20) de calculer lesdits coefficients d'offset et de gain avec une précision supérieure à celle des signaux de sortie du détecteur.

**7.** Système de normalisation selon l'une quelconque des revendications 1 à 6, dans lequel l'unité logique (40,140,50,160) d'addition d'offset et de multiplication par le gain est agencée de telle sorte que chaque coefficient d'offset est appliquée au signal de sortie de son détecteur respectif avant que le coefficient respectif de gain soit appliqué.

**8.** Système de normalisation selon l'une quelconque des revendications précédentes, comprenant des moyens pour éliminer les bits de données représentant une précision inutile après l'addition d'offset et la multiplication par le gain, ce qui améliore les signaux normalisés des détecteurs avec une précision choisie.

**9.** Système comprenant un système de normalisation (10,20) selon l'une quelconque des revendications 1 à 8, convenant pour un réseau de détecteurs thermiques (32), dans lequel les moyens de référence amènent les détecteurs à détecter au moins deux sources de référence thermiques (T1,T2) aux instants de mise à jour.

**10.** Procédé de normalisation de signaux délivrés par un détecteur (32), comprenant :

la détection d'une source de référence (T1,T2) au moyen du détecteur (32),

la production, à partir du détecteur (32) et en réponse à la source de référence (T1,T2), de signaux de référence du détecteur, qui présentent des erreurs d'offset et de gain par rapport à une caractéristique requise de sortie du détecteur,

la transmission des signaux de référence du détecteur et un processeur de coefficients (20),

le calcul de coefficients respectifs d'offset et de gain en réponse aux signaux de référence du détecteur,

l'exécution, avec un circuit d'addition (40,140) et un multiplicateur (50,160), pour chaque signal de sortie du détecteur, d'une addition de son coefficient d'offset respectif et d'une multiplication par son coefficient de gain respectif,

les coefficients d'offset et de gain étant calculés de telle sorte que leur application aux signaux de sortie du détecteur corrige les erreurs d'offset et de gain pour former des signaux de détecteur normalisés,

caractérisé en ce que la détection de la source de référence (T1,T2) et la production des signaux de référence du détecteur apparaissent à des instants mis à jour sélectionnés, en ce que les coefficients de gain et d'offset sont calculés avec une précision supérieure à celle des signaux de sortie du détecteur et en ce que les signaux normalisés du détecteur possèdent une précision supérieure à celle des signaux de sortie du détecteur.

**11.** Procédé selon la revendication 10, selon lequel le détecteur (32) est un réseau de détecteurs individuels (32) possédant chacun son propre signal de sortie, comprenant en outre les étapes suivantes :

mémorisation, pour chaque détecteur individuel (32), de coefficients d'offset et de gain, qui sont mis à jour à chaque instant de mise à jour;

délivrance de tels coefficients pour l'addition d'offset et la multiplication par le gain en synchronisme avec les signaux de sortie des détecteurs individuels.

**12.** Procédé selon la revendication 11, comprenant en outre :

la délivrance d'adresses pour les coefficients d'offset et de gain en synchronisme avec les signaux respectifs de sortie de leurs détecteurs;

les coefficients d'offset et de gain étant délivrés en réponse aux adresses de coefficients.

**13.** Procédé selon l'une quelconque des revendications 10 à 12, selon lequel l'étape de calcul de coefficients d'offset et de gain comprend :

la formation de la moyenne de signaux de référence de détecteurs à partir d'un nombre sélectionné d'instants de mise à jour; et l'utilisation du résultat de la formation de la moyenne pour filtrer le bruit et augmenter le rapport signal/bruit pour le détecteur.

**14.** Procédé selon l'une quelconque des revendications 10 à 13, comprenant en outre :

après l'addition d'offset et la multiplication par le gain, l'élimination des buts de données présentant une précision inutile fournissant les signaux de détecteur normalisés à une précision requise.

**15.** Procédé selon l'une quelconque des revendications 10 à 14, dans lequel chaque coefficient d'offset est additionné à son signal de sortie du détecteur respectif avant que le signal soit multiplié par son coefficient de gain respectif.

*FIG. 1a*

T2

T1

0                    DETECTOR                    n

IDEAL DETECTOR ARRAY RESPONSE

*FIG. 1b*

T2

T1

0              DETECTOR              n

ACTUAL

*FIG. 2*

MSB(D11)

D11–D00

OFFSET
ADDITION
12 X 12
2'S COMPLEMENT

40

MSB(OC15)

4LSB(OC03–OC00)

16(OC15–OC00)

12

13

42

UNDERFLOW/
OVERFLOW

16

14LSB

17MSB

GAIN
MULTIPLICATION
16 X 15
2'S COMPLEMENT

50

15MSB
(GC15–
GC01)

BPF(GC00)

60

CLIPPING

15

N15–NO1

BPF

10

OFFSET
COEFFICIENT

12

RAM      13

GAIN
COEFFICIENT

14

RAM      15

16(GC15–GC00)

OFFSET COEFFICIENT     GAIN COEFFICIENT

COEFFICIENT
PROCESSOR

20

30

32

34

T1

T2

THERMAL IMAGE

FIG. 3